# EUROPÄISCHE PATENTSCHRIFT

(11) **EP 3 955 513 B1**
(45) Veröffentlichungstag und Bekanntmachung des Hinweises auf die Patenterteilung: **07.06.2023**
(21) Anmeldenummer: 20191231.8
(22) Anmeldetag: 14.08.2020
(51) Int. Cl.: H04L 9/08, H04L 9/00

(54) **ERHÖHUNG DER SICHERHEIT VON QKD-SYSTEMEN**
INCREASE IN THE SECURITY OF QKD SYSTEMS
AUGMENTATION DE LA SÉCURITÉ DES SYSTÈMES QKD

(43) Veröffentlichungstag der Anmeldung: 16.02.2022
(73) Patentinhaber: Deutsche Telekom AG, 53113 Bonn (DE)
(72) Erfinder: BRAUN, Ralf-Peter, 12305 Berlin (DE); GEITZ, Marc, 58089 Hagen (DE)
(74) Vertreter: Brandt & Nern Patentanwälte

(56) Entgegenhaltungen:
- EP-A1- 1 742 409
- US-B1- 9 306 739

## Beschreibung

Die Erfindung betrifft eine Lösung, mit deren Hilfe die Sicherheit von QKD-Systemen im Hinblick auf das Vertrauen in die durch diese erzeugten quantensicheren Schlüssel erhöht werden kann. Sie bezieht sich hierbei insbesondere darauf, tatsächliche Attacken auf ein solches QKD-System und technische Störungen des Systems, welche als möglicher Angriff gewertet werden können oder zumindest temporär die Erzeugung tatsächlich sicherer Schlüssel verhindern, zu detektieren und dies gegebenenfalls in geeigneter Weise zu signalisieren. Die Detektion eines möglichen Angriffs oder vergleichbarer Beeinträchtigungen erfolgt hierbei anhand einer Erhöhung der gemessenen QBER (QBER = Qubit Error Rate), also der bei der Erzeugung gemeinsamer Schlüssel in dem Quantenkanal des Systems auftretenden Bitfehlerrate. Gegenstände der Erfindung sind ein Verfahren zur Detektion und zur Behandlung von Angriffen auf ein QKD-System und einen zur Durchführung des Verfahrens in geeigneter Weise ausgebildeten oder ausgestatteten, als QKD-Knoten ausgebildeten Netzwerkknoten.

QKD-Systeme, nämlich Systeme für die mittels eines Verfahrens der Quantum Key Distribution erfolgende Erzeugung quantensicherer Schlüssel, die gleichzeitig identisch bei zwei voneinander entfernten Netzwerkknoten (QKD-Knoten) als gemeinsame Schlüssel vorliegen, gelten dem Grunde nach als sehr sicher. Die hohe Sicherheit im Hinblick auf die Vertrauenswürdigkeit mittels solcher Systeme erzeugter quantensicherer Schlüssel basiert zum einen auf der Anwendung von Protokollen für die QKD-Verfahren, deren theoretische Sicherheit, das heißt die Widerstandsfähigkeit auch gegenüber Angriffen mit Quantencomputern, mathematisch bewiesen werden konnte und zum anderen darauf, dass die Quantenschlüssel gemeinsam erzeugenden QKD-Knoten als sogenannte Trustet Nodes ausgeführt werden. Derartige Trusted Nodes werden mit Hilfe aufwendiger Überwachungssysteme, Schließmechanismen, Alarmanlagen und dergleichen überwacht und gegen einen illegalen Zutritt gesichert.

Dennoch können auch solche Systeme potenziell Angriffen ausgesetzt sein. Hierbei kann es sich um Angriffe handeln, die trotz der speziellen Sicherheitsmaßnahmen gegen die Infrastruktur der Trusted Nodes geführt werden oder auch um spezielle Seitenkanalangriffe oder high sophisticated Man of the Middle Attacks auf die Übertragungsstrecke, das heißt auf die QKD-Knoten Netzwerkknoten) miteinander verbindende Übertragungskanäle, wie insbesondere den Quantenkanal. Im Hinblick auf das erstgenannte Angriffsszenario ist dabei anzumerken, dass eine potenzielle Schwachstelle immer auch der Mensch ist, nämlich beispielsweise Beschäftigte und sonstige Firmenangehörige des Betreibers eines jeweiligen QKD-Knotens. Darüber hinaus können aber auch technische Defekte, die in ihrer Wirkung einem Angriff gleichkommen, ein QKD-System kompromittieren und somit die Vertrauenswürdigkeit des Systems zerstören.

Im Hinblick auf die bei der Betrachtung von QKD-Systemen im Vordergrund stehenden kryptographischen Sachverhalte sollen nachfolgend, bezogen auf die Übertragungsrichtung im Quantenkanal - wie auf dem Gebiet der Kryptographie allgemein üblich - der Quantensignale an den anderen Netzwerkknoten des Systems aussendende QKD-Knoten auch als "Alice" und der diese Quantensignale empfangende QKD-Knoten als "Bob" bezeichnet werden. Ein möglicher Angreifer wird in kryptographischen Kontexten üblicherweise als Eve (von Eavesdropper = Lauscher) bezeichnet.

Angriffsziele für spezielle, gegen ein QKD-System gerichtete Angriffe oder Einflüsse, welche - zumindest, wenn sie plötzlich auftreten - mit einem Angriff vergleichbare Folgen hervorrufen, können beispielsweise sein:
- Zufallszahlengeneratoren: Diese steuern in einem QKD-System die Wahl der Basen und die Reihenfolge der 0 oder 1 Werte für die Rohschlüsselerzeugung. Ein Angriff auf den Zufallszahlengenerator oder auf dessen Anbindung an das System, in deren Ergebnis beispielsweise voreingestellte und somit bekannte Zahlenfolgen abgespielt anstatt Zufallszahlen erzeugt werden, ermöglicht es einem Angreifer ein QKD-System zu kompromittieren und die Schlüssel unerkannt abzugreifen. Dies gilt sowohl für die Quelle (Alice) als auch für den Empfänger (Bob).

Insbesondere bei optischen Discrete Variable QKD-Systemen (DV-QKD-Systemen) sind weitere mögliche Angriffsziele:
- Die optischen Abschwächer der Photonenquelle: Werden zu viele Photonen von der Quelle (Alice) zum Empfänger (Bob) gesendet, so verlässt das System das quantenoptische Regime und verhält sich somit klassisch. Die Quantenschlüsselverteilung wird somit unsicher.
- Die optische Leitung: Optische Signale können beispielsweise durch Biegung der optischen Leitung oder eventuell durch geeignete Koppler aus der Glasfaser extrahiert, gemessen und somit verändert werden.
- Die optischen Filter: Quellenseitig erzeugen optische Filter schmalbandige Übertragungssignale und verringern empfängerseitig optische Störungen bei der Detektion. Infolge einer Manipulation der Filter könnten empfängerseitig vermehrt optische Störungen auftreten, welche ein sicheres Auslesen der übertragenen Quantenzustände (der quantenmechanischen zustände) verhindern.
- Detektoren: Empfängerseitig werden Einzelphotonen detektiert, indem eine Elektronenkaskade innerhalb eines Halbleiters erzeugt und das entstehende Spannungssignal gemessen wird. Nach einer Messung verlieren die Detektoren für einen bestimmten Zeitraum ihre Sensitivität. Zudem tritt das Dunkelstromproblem auf, also die Auslösung der Elektronenkaskade, obwohl kein Photon detektiert wurde. Ein Angriff auf ein QKD-System kann also durch Störung der Detektoren durch optische Einstrahlung innerhalb und außerhalb der Glasfaser oder äußere Effekte am Empfänger (Bob) erfolgen.
- Äußere Effekte: Temperaturänderungen, Druckänderungen, Bauarbeiten mit Erschütterung der Glasfaser, kosmische Höhenstrahlung stören QKD-Systeme und müssen kompensiert werden.

Aber auch auf CV-QKD-Systeme (CV-QKD = Continuous Variable Quantum Key Distribution) sind Angriffe denkbar. Angriffe auf Dämpfer/Abschwächer spielen hier allerdings keine Rolle, da hier die Schlüsselinformation im Phasenraum von Laserstrahlen kodiert und empfängerseitig homodyne Detektoren verwendet werden. Bei letzteren werden mögliche Angriffe, wie eine Homodyne Detektor Blinding Attack (https://journals.aps.org/pra/abstract/10.1 103/PhysRevA.98.012312), als eine Möglichkeit diskutiert.

Typischerweise würden eventuelle Angriffe auf ein QKD-System oder diesen in ihrer Wirkung gleichkommende technische Defekte zu einer signifikanten Erhöhung der Bitfehlerrate QBER in einem QKD-System führen. Soweit hierdurch ein für das System festgelegter Schwellwert der empfängerseitig, das heißt bei dem quantenmechanische Zustände über den Quantenkanal empfangenden Netzwerkknoten, fortwährend gemonitorten QBER überschritten wird, greifen in dem System zur Gewährleistung der Sicherheit implementierte Mechanismen. Aufgrund des Greifens dieser Mechanismen werden beispielsweise bereits erzeugte Schlüssel verworfen, die Erzeugung von Schlüsseln temporär eingestellt und/oder Alarmsignale an dafür vorgesehene Einrichtungen übermittelt.

EP1742409 beschreibt Detektion und Behandlung von Angriffen auf QKD Systeme.

Jedoch erscheint es auch denkbar, dass ein, in kryptographischen Systemen, wie bereits ausgeführt, allgemein als Eve bezeichneter Angreifer einen Angriff so ausführt, dass dessen Auswirkungen unterhalb des für die QBER festgelegten Schwellwerts bleiben. Sofern Eve unterhalb der QBER-Schwelle operiert, besteht dann aber eine gewisse Wahrscheinlichkeit, dass Eve unbemerkt zu einer Informationserkenntnis gelangt, welche es ermöglicht, auf die durch das QKD-System erzeugten Schlüssel zu schließen. Das QKD-System insgesamt wäre dann nicht mehr als quantensicher einzustufen.

Aufgabe der Erfindung ist es, eine Lösung bereitzustellen, welche es insbesondere ermöglicht, in einem QKD-System auch Angriffe zu detektieren und entsprechend zu behandeln, welche in der Weise ausgeführt werden, dass sie unterhalb der für das System definierten QBER Schwelle bleiben. Hierzu sind ein Verfahren anzugeben sowie ein QKD-Knoten zur Ausführung dieses Verfahrens in geeigneter Weise auszubilden oder auszustatten.

Die Aufgabe wird durch ein Verfahren mit den Merkmalen des Patentanspruchs 1 gelöst. Ein zur Durchführung des Verfahrens und damit zur Lösung der Aufgabe ausgestatteter QKD-Knoten wird durch den ersten Sachanspruch charakterisiert. Vorteilhafte Aus- und Weiterbildungen der Erfindung sind durch die jeweiligen Unteransprüche gegeben.

Bei dem zur Detektion und Behandlung von Angriffen auf ein QKD-System mit zwei QKD-Knoten vorgeschlagenen Verfahren wird ein möglicher Angriff auf das QKD-System anhand einer Änderung, insbesondere einer Erhöhung der Bitfehlerrate, nämlich der Quantum Bit Error Rate (QBER), detektiert. Das Verfahren ist hierbei ausgebildet zur Detektion und Behandlung von Angriffen auf ein QKD-System mit zwei QKD-Knoten, nämlich mit einem ersten Netzwerkknoten und einem zweiten Netzwerkknoten, die für eine nach einem Verfahren der Quantum Key Distribution erfolgende Erzeugung identischer, gleichzeitig bei beiden QKD-Knoten vorliegender quantensicherer Schlüssel über einen Quantenkanal miteinander verbunden sind. Der vorgenannte Quantenkanal dient der Übertragung von Quantenzuständen zwischen den QKD-Knoten.

Erfindungsgemäß wird am Eingang des Signale über den Quantenkanal empfangenden QKD-Knotens ein zusätzlich ein deterministisches, zeitperiodisches Signal in den Quantenkanal eingekoppelt. Es handelt sich hierbei um ein zusätzliches Signal, welches, in Überlagerung mit einer messbaren, systemtypischen mittleren QBER, eine in ihrem zeitlichen Verlauf deterministische und von einer, mit einer dazu ausgebildeten Schnittstelle des QKD-Systems über einen Kontrollkanal verbundenen Kontroll- und Monitoreinrichtung des die Signale über den Quantenkanal empfangenden QKD-Knotens auswertbare QBER verursacht. Eine durch die Kontroll- und Monitoreinrichtung registrierte Abweichung von diesem deterministischen zeitlichen Verlauf der QBER wird von der Kontroll- und Monitoreinrichtung als Angriff detektiert und signalisiert. Als deterministisch wir nach diesem Verständnis ein Signal mit einem definierten zeitlichen Verlauf angesehen. Demgemäß bezeichnet ein Signal mit einem deterministischen zeitlichen Verlauf ein Signal, dessen jeweilige Signalparameter, wie beispielsweise Amplitude und/oder Frequenz, zu jedem Zeitpunkt eines betrachteten zeitlichen Intervalls einen definierten, respektive einen jeweils zu erwartenden Wert haben, was sich unter anderem in einer Signalform (zum Beispiel Rechteck, Dreieck oder Sägezahn) manifestieren kann.

Ein von der vorgenannten Kontroll- und Monitoreinrichtung detektierter Angriff auf das QKD-System wird von dieser an ein Schlüsselmanagement des QKD-Systems und/oder an ein übergeordnetes Netzwerkmanagement signalisiert. Hier können dann auf der Grundlage des Eingangs einer entsprechenden Notifikation der Kontroll- und Monitoreinrichtung geeignete Maßnahmen ergriffen werden. Entsprechende Maßnahmen können dabei teilautomatisiert oder vorzugsweise vollautomatisiert durch dafür ausgebildete Systeme und Einrichtungen, welche nicht Gegenstand der vorliegenden Erfindung sind, eingeleitet werden. Bei diesen Maßnahmen kann es sich beispielsweise um eine Unterbrechung der Schlüsselerzeugung oder um auf der Basis weiterer Analysen getroffene Abwehrmaßnahmen handeln.

Eine mögliche Ausgestaltung des erfindungsgemäßen Verfahrens bezieht sich auf optische QKD-Systeme. Bei solchen QKD-Systemen werden die, über den die beiden QKD-Knoten miteinander verbindenden Quantenkanal übertragenen quantenmechanischen Zustände optisch vermittelt. Die optische Leistung im Quantenkanal ist dabei sehr gering und liegt typischerweise in einem Bereich von weniger als ein Photon pro Bit (Energie eines Photons ist gleich dem Produkt des Planck'schen Wirkungsquantums h multipliziert mit der optischen Frequenz f des Photons). Erfindungsgemäß wird bei der, sich auf optische QKD-Systeme beziehenden Implementierung des Verfahrens eingangs des Quantensignale über den Quantenkanal empfangenden QKD-Knotens über einen optischen Dreiport-Zirkulator ein deterministisches, zeitperiodisches optisches Signal als Herzschlagsignal entgegen der Ausbreitungsrichtung durch das QKD-System übertragener Quantenzustände (also in Richtung des sendenden Netzwerkknotens Alice) in den Quantenkanal eingekoppelt.

Entsprechend einer besonders bevorzugten, sich auf optische QKD-Systeme beziehenden Ausbildung der Erfindung werden eingangs des optisch vermittelte Quantensignale über den Quantenkanal empfangenden QKD-Knotens leistungsarme Impulse eines Lasers eingekoppelt. Dieser wird dabei hinsichtlich der Leistung und der optischen Frequenz der in den Quantenkanal eingekoppelten Laserstrahlung erfindungsgemäß so betrieben, dass zwischen den über den Quantenkanal übertragenen, optisch vermittelten quantenmechanischen Zuständen und dem zusätzlich eingekoppelten Signal des Lasers Wechselwirkungen aufgrund des Prinzips der SBS, das heißt der Stimulierten Brillouin Streuung, stattfinden, welche zu einer deterministischen Beeinflussung der messbaren QBER führen. Sprachlich vereinfachend soll nachfolgend im Zusammenhang mit einer solchen Ausbildungsform bezüglich des zusätzlich eingekoppelten, die SBS im Quantenkanal hervorrufenden Lasersignals auch von einem SBS-Signal oder von SBS-Impulsen des entsprechenden Lasers gesprochen werden. Im Zusammenhang mit den durch die Einkopplung derartiger SBS-Signale hervorgerufenen, deterministischen Änderungen der gemessenen QBER soll außerdem auch von einem SBS-induzierten Signal gesprochen werden.

Die Leistung der gemäß der zuvor erläuterten Verfahrensgestaltung als Herzschlagsignal eingekoppelten SBS-Impulse beträgt ca. -90 dBm, das heißt vorzugsweise -90 dBm oder weniger. Sie kann im Einzelfalle auch geringfügig höher sein, sofern dennoch der Eintritt des SBS-Effektes gewährleistet ist. Dabei wird die von einem Laser emittierte, in den Quantenkanal eingekoppelte Leistung mittels entsprechender, insoweit bei allen vorstehenden und nachfolgenden Betrachtungen sowie bezüglich der Patentansprüche (auch ohne ausdrückliche Erwähnung) als zur Strahlungsquelle, respektive zum Laser, des Herzschlagsystems gehörig betrachte Dämpfungsmittel auf den vorstehend sehr geringen Wert verringert.

Zudem ist ein Frequenzversatz des Herzschlagsignals gegenüber dem über den QKD-Kanal übertragenen optischen Signal von 10 GHz bis 30 GHz erforderlich. Um diesen Versatz ist die Frequenz des in den Quantenkanal eingekoppelten SBS-Signals höher als die Frequenz des darin geführten optischen QKD-Signals. Oder anders ausgedrückt die Wellenlänge des eingekoppelten Signals ist über die Beziehung c = λ * f (mit c = Lichtgeschwindigkeit, λ [Lambda] = Wellenlänge und f = Frequenz) entsprechend niedriger als die des optischen QKD-Signals. Die angegebene, in jedem Falle geringe, sich im pW-Bereich (Pikowatt) bewegende Leistung bezieht sich auf einen für QKD-Systeme gebräuchlichen Wellenlängenbereich für das optische Signal im Quantenkanal von 1.310 nm bis 1.600 nm, wobei der vorstehend erwähnte Frequenzversatz sich dann vorzugsweise in einem Bereich von ca. +10 GHz bis +12 GHz (um welchen die Frequenz des SBS-Signals höher ist als die des QKD-Signals) bewegen sollte. Zudem muss die optische Frequenz des das optische Zusatzsignal bereitstellenden Lasers aufgrund der physikalisch bedingten geringen Wirkungsbandbreite für den SBS-Effekt von nur 30 MHz sehr genau gesteuert, das heißt im Wege einer Regelung stabilisiert werden. Die insoweit für den betreffenden Laser genau einzustellenden Parameter sind im Zuge der Implementierung und Konfiguration eines erfindungsgemäß modifizierten Systems zu ermitteln.

Das Verfahren kann vorzugsweise so weitergebildet sein, dass bei der Korrelation der am empfangenden QKD-Knoten gemonitorten QBER gegen den deterministischen, aus der Überlagerung der systemtypischen mittleren QBER mit der durch das Herzschlagsignal verursachten QBER resultierenden zeitlichen Verlauf, QBER Schwankungen, welche durch langsam wirkende Einflüsse, wie Temperatur und Druck, verursacht werden, unberücksichtigt bleiben, das heißt von der Kontroll- und Monitoreinrichtung herausgerechnet werden. Hierdurch wird die Zuverlässigkeit der Detektion möglicher Angriffe auf das QKD-System weiter erhöht.

Die Verbesserung ergibt sich dabei daraus, dass mögliche Angriffe auf das QKD-System typischerweise, anders als langzeitliche Schwankungen oder als Umgebungseinflüsse, wie Temperatur und Druck, sehr schnelle und abrupte Änderungen der im empfangenden QKD-Knoten gemonitorten QBER zur Folge haben dürften. Demgemäß werden durch die zuvor erläuterten Maßnahmen nicht angriffsbedingte Einflüsse auf das QKD-System, welche ebenfalls Änderungen der QBER (allerdings eben eher allmähliche Änderungen) verursachen und dadurch das Detektionsergebnis verfälschen könnten, kompensiert.

Für die konkrete Ausprägung des Herzschlagsignals kommen unterschiedliche Möglichkeiten in Betracht. So kann dieses beispielsweise so eingestellt werden, dass zumindest infolge eines tatsächlichen Angriffs auf das QKD-System oder eines als ein möglicher Angriff zu wertenden technischen Defekts des QKD-Systems zeitweise der für die QBER des QKD-Systems festgelegte Schwellwert überschritten wird. Im Falle des Überschreitens dieses Schwellwerts werden typischerweise in den QKD-Systemen selbst dafür vorgesehene Sicherheitsmechanismen greifen. Unabhängig davon werden entsprechend dem erfindungsgemäßen Verfahren durch die Kontroll- und Monitoreinrichtung des Herzschlagsystems zusätzliche Maßnahmen, wie beispielsweise das Aussenden einer Alarmnotifikation an für deren Empfang vorgesehene Einheiten, ausgelöst.

Das Verfahren kann aber auch so gestaltet sein, dass das eingangs des empfangenden QKD-Knotens als Herzschlagsignal in den Quantenkanal eingekoppelte optische Signal so eingestellt wird, dass der für die QBER des QKD-Systems festgelegte Schwellwert auch ohne das Vorliegen eines Angriffs auf das QKD-System zeitperiodisch überschritten wird. In diesem Falle ist das Verfahren jedoch außerdem so gestaltet, dass das deterministische periodische Überschreiten des Schwellwerts für die QBER durch Kontroll- und Monitoreinrichtung die erfindungsgemäß vorgesehene Kontroll- und Monitoreinrichtung des Herzschlagsystems des empfangenden QKD-Knotens nicht als Angriff auf das QKD-System detektiert und signalisiert wird. Die Kontroll- und Monitoreinrichtung des Herzschlagsystems kann - je nach Auslegung des Gesamtsystems- insoweit (hinsichtlich nicht als Angriff zu wertender Überschreitungen des QBER-Schwellwertes) auch auf eine, von ihr, aufgrund einer über eine Schnittstelle zum QKD-System bestehenden Wechselwirkung, in das Monitoring einbezogene Monitoreinrichtung des empfangenden QKD-Knotens einwirken. Eine solche Gestaltung des erfindungsgemäßen Verfahrens bietet aber den Vorteil, dass unter anderem auch Angriffe auf das Herzschlagsystem selbst bemerkt würden, in deren Folge das deterministische periodische Überschreiten des QBER-Schwellwertes ausbleiben oder gar überhaupt kein Herzschlagsignal mehr in den Quantenkanal eingekoppelt würde.

Unabhängig von den beiden zuvor erläuterten Verfahrensgestaltungen kann das Herzschlagsignal, gesteuert durch die Kontroll- und Monitoreinrichtung des Herzschlagsystems, so eingestellt werden, dass der aus der Überlagerung mit den Quantensignalen des Quantenkanals resultierende deterministische zeitliche Verlauf der QBER durch die Kontroll- und Monitoreinrichtung des die Quantensignale empfangenden QKD-Knotens als Rechtecksignal erfassbar ist. Eine andere Möglichkeit besteht darin, dass das Herzschlagsignal so ausgebildet wird, dass der deterministische zeitliche Verlauf der QBER sich als Dreiecksignal mit einem rampenförmigen Verlauf darstellt. Eine solche Verfahrensgestaltung ermöglicht komplexere Auswertungen des QBER-Verlaufs durch die Kontroll- und Monitoreinrichtung. So können beispielsweise zusätzliche Aussagen über die Qualität eines Angriffs aufgrund von Abweichungen des QBER-Verlaufs im Bereich der in Abwesenheit eines Angriffs auftretenden, deterministisch steigenden und fallenden Rampen der QBER getroffen werden. Zusätzliche Aussagen können außerdem durch die Bildung von Integralen über Flächenabschnitte innerhalb des Dreiecksignals erhalten werden.

Bei einem die Aufgabe lösenden und zur Ausführung des zuvor erläuterten Verfahrens geeigneten QKD-Knoten handelt es sich um einen Netzwerkknoten, der mit einem anderen Netzwerkknoten (ebenfalls ein QKD-Knoten) unter Ausbildung eines QKD-Systems für eine nach dem Prinzip der Quantum Key Distribution erfolgende Erzeugung identischer, gleichzeitig bei beiden Netzwerkknoten vorliegender quantensicherer Schlüssel über einen Quantenkanal zumindest zum Empfang optisch übermittelter quantenmechanischer Zustände verbunden ist. Erfindungsgemäß weist ein solcher QKD-Knoten ein Herzschlagsystem auf, welches aus einer optischen Strahlungsquelle, aus einem eingangs des QKD-Knotens in den Quantenkanal eingefügten optischen Dreiport-Zirkulator und aus einer, mit einer dazu ausgebildeten Schnittstelle des QKD-Systems über einen Kontrollkanal verbundenen, die QBER überwachenden Kontroll- und Monitoreinrichtung besteht.

Hierbei ist die optische Strahlungsquelle des vorgenannten Herzschlagsystems zur Erzeugung eines als Herzschlagsignal wirkenden periodischen optischen Signals ausgebildet, welches, aufgrund seiner mittels des Dreiport-Zirkulators erfolgenden Einkopplung in den Quantenkanal, in Überlagerung mit einer messbaren systemtypischen mittleren QBER des QKD-Systems, ein in seinem zeitlichen Verlauf deterministisches und von der Kontroll- und Monitoreinrichtung des QKD-Knotens auswertbares QBER-Signal verursacht.

Ferner ist die Kontroll- und Monitoreinrichtung des erfindungsgemäß an dem Quantenzustände über den Quantenkanal empfangenden QKD-Knoten vorgesehenen Herzschlagsystems dazu ausgebildet, die vorgenannte Strahlungsquelle zur Erzeugung des Herzschlagsignals zu steuern und eine von der Kontroll- und Monitoreinrichtung (gegebenenfalls im Zusammenwirken mit einer Monitoring-Einrichtung des empfangenden QKD-Knotens Bob) registrierte Abweichung von dem deterministischen zeitlichen Verlauf der QBER als Angriff zu detektieren sowie einem Schlüsselmanagement des QKD-Systems und/oder einem übergeordneten Netzwerkmanagement zu signalisieren. Entsprechend einer bevorzugten Ausbildungsform des erfindungsgemäßen QKD-Knotens ist die Strahlungsquelle seines Herzschlagsystems ein Laser, der - korrespondierend mit der entsprechenden Ausbildungsform des erfindungsgemäßen Verfahren - hinsichtlich der Leistung und der optischen Frequenz der in den Quantenkanal eingekoppelten Laserstrahlung so betrieben wird, dass zwischen den über den Quantenkanal übertragenen, optisch vermittelten quantenmechanischen Zuständen und dem zusätzlich eingekoppelten Signal des Lasers Wechselwirkungen aufgrund des Prinzips der SBS stattfinden, welche zu einer deterministischen Beeinflussung der messbaren QBER führen.

Soweit vorstehend und in den Patentansprüchen ausgeführt wird, dass es sich bei dem erfindungsgemäßen QKD-Knoten um einen Netzwerkknoten handelt, der mit dem anderen Netzwerkknoten des QKD-Systems zumindest zum Empfang optisch vermittelter quantenmechanischer Zustände über einen Quantenkanal verbunden ist, bezieht sich dies auf die Möglichkeit, dass der Quantenkanal eines QKD-Systems gegebenenfalls auch bidirektional ausgebildet sein kann. In einem solchen Fall wären beide QKD-Knoten des QKD-Systems Netzwerkknoten, welche quantenmechanische Zustände über den Quantenkanal senden und empfangen. Folglich wären in einem solche Falle sinnvollerweise beide QKD-Knoten mit einem entsprechenden Herzschlagsystem auszustatten.

In bisher bekannt gewordenen optischen QKD-Systemen werden im allgemeinen Quantenkanäle für eine Übertragung von Quantenzuständen durch eine unidirektionale Übertragung von Licht extrem niedriger Leistung, nämlich von (Einzel-) Photonen vom Netzwerkknoten Alice zum Netzwerkknoten Bob genutzt, um quantensichere Schlüssel in beiden voneinander getrennten Knoten gleichzeitig zu erzeugen und bereitzustellen. Wie aber bereits ausgeführt, wäre bei Systemen dieser Art grundsätzlich auch eine bidirektionale Übertragung von Quantenzuständen über den Quantenkanal möglich. So wurde auch bereits ein Quantenschlüsselaustausch bidirektional oder unter Verwendung von verschränkten Photonen aus einer zentral gelegenen Lichtquelle demonstriert. Hingegen basiert die Continuous Variable CV-QKD auf der Verschiebung von Amplitude und Phase von Laserstrahlen im optischen Phasenraum, wobei hier stets ein unidirektionaler Quantenkanal vorliegt.

Gemeinsam ist den Systemen, dass es neben einem die Netzwerkknoten verbindenden Quantenkanal (Quantum Channel) einen konventionellen Kontrollkanal (Control Channel) gibt, das heißt einen Kanal mit zwar speziell gesicherter, aber klassisch digitaler Datenübertragung, der nicht zur Übertragung quantenmechanischer Zustände ausgebildet ist und die Netzwerkknoten in jedem Falle bidirektional zur Übertragung von zur gemeinsamen Schlüsselerzeugung erforderlichen Steuer- und Kontrolldaten miteinander verbindet.

Erfindungswesentlich ist es, dass der jeweils optisch vermittelte quantenmechanische Zustände über den Quantenkanal empfangende QKD-Knoten, nämlich einer der QKD-Knoten im Falle eines unidirektionalen Quantenkanals oder beide QKD-Knoten im Falle eines bidirektionalen Quantenkanals, mit dem zuvor beschriebenen Herzschlagsystem aus Strahlenquelle, Zirkulator und Kontroll- und Monitoreinrichtung ausgestattet ist. Dabei kann das Herzschlagsystem als separate, das heißt gewissermaßen ergänzende Einheit dem (jeweiligen) QKD-Knoten zugeordnet sein, wobei allerdings der optische Dreiport-Zirkulator im Bereich des Eingangs des Quantenkanals bei dem, die über dQuantenkanal übertragenen Quantenzustände empfangenden QKD-Knoten (Bob) in den Quantenkanal eingefügt sein muss. Zudem muss selbstverständlich eine Datenverbindung (ein Kontrollkanal) zwischen einer dafür vorgesehenen Schnittstelle des QKD-Systems und der bereits mehrfach angesprochenen Kontrolleinrichtung Kontroll- und Monitoreinrichtung des Herzschlagsystems bestehen.

Entsprechend einer besonders bevorzugten Ausbildungsform des erfindungsgemäßen QKD-Knotens ist aber das Herzschlagsystem unmittelbar in den QKD-Knoten integriert, wobei auch der optische Dreiport-Zirkulator innerhalb des typischerweise als Trusted Node ausgebildeten QKD-Knotens angeordnet ist. Hierdurch wird sichergestellt, dass sich auch das Herzschlagsystem innerhalb der Trusted Zone befindet, welche durch spezielle Überwachungssysteme und gesicherte Zutrittseinrichtungen gegen einen widerrechtlichen Zutritt sowie gegen einen nicht autorisierten Zugriff auf ihre Einheiten geschützt beziehungsweise hardwaremäßig gehärtet ist.

Gemäß der vorstehend vorgestellten Erfindung wird die Änderung der Gesamt-QBER mittels des QKD-Herzschlagsystems durch den physikalischen faseroptischen nichtlinearen Effekt der Stimulierten Brillouin Streuung (SBS) herbeigeführt. Ein durch Eve erfolgender Angriff kann detektiert werden, indem die gemessenen QBER-Signale mit den SBS-induzierten Signalen korreliert und entsprechend ausgewertet werden.

Dabei würden optische QKD-Systeme, die mit sehr geringen Empfangsleistungen arbeiten (bis zu kleiner als 1 Photon pro Bit, wie zum Beispiel DV-QKD-Systeme, das heißt Discrete Variable QKD-Systeme), nur mit einem zusätzlichen Signal verschwindend geringer Leistung, nämlich vorzugsweise mit einem über einen Zirkulator eingekoppelten SBS-Signal in der Größenordnung von ca. -90 dB, beaufschlagt werden. Dieses schwache Herzschlagsignal wäre außerhalb des QKD-Systems praktisch nur sehr schwer bis im Grunde gar nicht messbar. Optische QKD-Systeme mit vergleichsweise höheren Empfangsleistungen (zum Beispiel CV-QKD-Systeme, das heißt Continuous Variable QKD-Systeme) würden entsprechend mit einem (SBS-) Herzschlagsignal höherer Leistung beaufschlagt. Insoweit ist die Erfindung auch bei CV-QKD-Systemen eisetzbar.

Das zusätzliche optische Signal (Herzschlagsignal) wird entgegen der Ausbreitungsrichtung des Quantensignals durch einen optischen passiven Faser-Zirkulator in den Quantenkanal (nämlich ausgehend von Bob in Richtung Alice) eingekoppelt, wodurch eine geringe zusätzliche Dämpfung des Quantenkanals notwendiger Weise berücksichtigt werden muss. Insbesondere werden aber keine Eingriffe in bestehende Funktionalitäten oder Regelmechanismen des bestehenden QKD-Systems vorgenommen, sondern das QKD-System selbst bleibt vorteilhafterweise im Wesentlichen unverändert.

Zur erfolgreichen Nutzung des nichtlinearen optischen SBS-Effektes in Glasfasern sind verschiedenen Voraussetzungen und Randbedingungen notwendig, um gezielt QKD-Systeme, das heißt die im Quantenkanal verwendeten Quantensignale zu beeinflussen, die nachfolgend genannt oder, sofern bereits erwähnt, an dieser Stelle nochmals zusammengefasst werden sollen:
- Der SBS-Effekt ist ein physikalischer Effekt zwischen zwei gegenläufigen optischen Wellen aufgrund der nichtlinearen Wechselwirkung mit akustischen Wellen entlang der Ausbreitungsrichtung im Medium der Glasfaser. Somit müssen sich das QKD-Quanten-Signal und das SBS-Signal in der Glasfaser des Quantenkanals in entgegengesetzten Richtungen ausbreiten.
- Aufgrund des SBS-Effekts, der keinen Schwellenwert aufweist und auch entlang der Glasfaserstrecke wirkt, liegt die in die Glasfaser des Quantenkanals (Quantum Link) einzukoppelnde Leistung in der Größenordnung von ca. -90 dBm (10⁻¹² W oder im piko-Watt pW-Bereich) für zum Beispiel DV-QKD-Systeme und ist somit sehr klein und kaum messbar, um den gewünschten Effekt zu erreichen und die Quantenkanal-Welle entsprechend induziert zu beeinflussen und damit die QBER gezielt zu verändern.
- Es muss ein SBS-Frequenzversatz von 10 GHz bis 30 GHz, vorzugsweise von ca. 10 GHz bis 12 GHz bei 1310 nm bis 1600 nm zwischen den gegenläufigen optischen Wellen eingehalten werden.
- Die Wirkungsbandbreite für das Hervorrufen einer SBS-Wechselwirkung beträgt nur ca. 30 MHz, so dass die optische Frequenz des Lasers entsprechend genau gesteuert und stabilisiert, das heißt geregelt werden muss.
- Für die Anwendung als QKD-Herzschlagsystem müssen entsprechende Stellmechanismen für die optische Frequenz des das SBS-Signal bereitstellenden Lasers sowie für dessen optische Leistung, zum Beispiel durch einen Variablen Optischen Attenuator (VOA), bereitgestellt werden.
- Für die Anwendung als QKD-Herzschlagsystem müssen entsprechende Regelmechanismen bereitgestellt werden, die stabile und vorhersagbare Arbeitszustände erlauben, um eine gezielte und definierte Beeinflussung der gemessenen QBER des QKD-Systems zu erreichen.
- Durch geeignete intelligente Regel- und Anpassungsmechanismen können verschiedene Arten von Systemveränderungen, Beeinflussungen, oder Angriffen kategorisiert werden, um auftretenden unerwünschten, zu Verfälschungen führenden Gegebenheiten beim QKD-System und beim Herzschlagsystem entgegenzuwirken oder gegebenenfalls die Systeme entsprechend anpassen zu können.

Bei Einhaltung der dargestellten Voraussetzungen und Randbedingungen kann ein QKD-System um ein QKD-Herzschlagsystem erweitert werden, um die Sicherheit des QKD-Gesamtsystems zu steigern. So kann das QKD-System proaktiv und quasi kontinuierlich, entsprechend einem Herzschlagsystem, gezielt und induziert manipuliert und beobachtet werden, so dass kleinste Änderungen am System durch die gemessenen QBER-Werte detektiert, verglichen und ausgewertet werden können. Dadurch sind entsprechende kleinste Systemveränderungen und potenzielle Angriffe unmittelbar aufspürbar, die sonst unbemerkt bleiben würden. Die Wirksamkeit der vorgeschlagenen Lösung wurde in einem Experiment mit einem DV-QKD-System verifiziert. Aber auch für CV-QKD-Systeme sollte sie einsetzbar sein.

Für den Einsatz der erfindungsgemäßen Lösung in QKD-Systemen und in Netzwerken mit derartigen Systemen können folgende Erwägungen getroffen und Vorteile benannt werden:
Das mit der Erfindung vorgeschlagene proaktive QKD-Herzschlagsystem kann ohne gravierende Änderungen in bestehenden QKD-Systeme nachgerüstet werden, da das QKD-System nur durch im Wesentlichen drei Komponenten (optische Strahlungsquelle, respektive Laser zur Bereitstellung des SBS-Signals, Kontroll- und Monitoreinrichtung, Dreiport-Zirkulator) erweitert und darüber hinaus nicht verändert werden muss.

Dazu wird in den Quantenkanal im Trusted Node Bob direkt vor den Fasereingang von Bob lediglich ein Dreiport-Zirkulator eingefügt. Damit kommt eine geringfügige Dämpfung im Bereich von 1 - 2 dB hinzu, die das QKD-System bei der Neu-Initialisierung berücksichtigen wird. Eine weitere wesentliche Komponente ist der abstimmbare Laser zur Bereitstellung des SBS-Signals, dessen Faserausgang über entsprechende Dämpfungsglieder mit dem freien Fasereingang des Dreiport-Zirkulators verbunden wird, so dass die gewünschte geringe Lichtleistung in Richtung Alice eingestrahlt wird.

Aufgrund der Stimulierten Brillouin Streuung (SBS) wird die von Alice nach Bob laufende Quantum Channel Welle durch die von Bob nach Alice in entgegengesetzter Richtung laufenden SBS-Welle beeinflusst, wenn die SBS-Welle um die SBS-Offset Frequenz von ca. +12 GHz von der optischen Frequenz der entgegenlaufenden Quantum Channel Welle versetzt ist. Die Interaktionsbandbreite zwischen beiden Wellen beträgt ca. 30 MHz, so dass die optische Frequenz der SBS-Welle im Knoten Bob entsprechend genau kontrolliert werden muss.

Aufgrund der physikalischen Eigenschaften SBS-Effekts ist die Einkopplung einer nur sehr geringen optischen Leistung von ca. -90 dBm (-90 dBm oder weniger) in DV-QKD-Systemen notwendig, um die gewünschte Beeinflussung der QBER zu erhalten. Damit ist diese zusätzliche Vorrichtung nach außen hin kaum messbar. Aufgrund der geringen optischen Leistung des die SBS hervorrufenden Lasersignals, der geringen spektralen Wirkbandbreite, des geringen SBS-Frequenzversatzes und der Polarisationsabhängigkeit der gegenläufigen optischen Wellen zur Nutzung des SBS-Effektes ist zudem die insoweit gegebene Störung des Gesamtsystems minimal bis vernachlässigbar.

Das vorgeschlagene QKD Herzschlagsystem kann vorteilhaft auch in neu aufzubauende QKD-Systeme integriert und Bestandteil des QKD-Systems werden. Dabei kann die Steuerung des das SBS-Signal bereitstellenden Lasers in das System mit integriert werden. Im Ergebnis wird die Angreifbarkeit von QKD-Systemen deutlich verringert und somit die Sicherheit des Gesamtsystems entsprechend erhöht.

Das QKD Herzschlagsystem kann in die verschiedenen QKD-Systeme nahtlos integriert werden, da der Quantum Channel von Alice zu Bob hin passiv aufgebaut sein muss, andererseits würden die zu messenden Quantenzustände der Photonen zerstört werden. Da die optische Frequenz des das SBS-Signal bereitstellenden Lasers nur einige GHz höher ist als die optischen Frequenz der Quantum Channel Welle, finden beide Wellen ähnliche Ausbreitungsbedingungen vor.

Im O-Band QKD-System muss die optische Wellenlänge des das SBS-Signal bereitstellenden Lasers bei der entsprechenden Quantum Channel Welle um ca. 1.310 nm liegen. Für C-Band QKD-Systeme muss die optische Wellenlänge im Bereich von ca. 1.530 nm bis 1.560 nm entsprechend der Quantum Channel Welle liegen.

Die optische Frequenz des das SBS-Signal bereitstellenden Lasers muss durch Bob oder durch eine externe Anordnung kontrolliert werden, wobei sowohl die optische Frequenz als auch die optische Leistung eingestellt werden müssen. Die optische Frequenz muss so eingestellt respektive geregelt werden, dass zwischen den beiden gegenläufigen Wellen die SBS-Offset Frequenz vorliegt, damit eine Interaktion zwischen den beiden Wellen vorliegen und die QBER beeinflusst werden kann. Über die optische Leistung kann dann die QBER auf definierte Werte eingestellt werden, die von der Monitorsystem des QKD-Systems im Knoten Bob gemessen und bereitgestellt werden kann. Die Polarisation der optischen SBS- und Quanten-Wellen muss auch entsprechend eingestellt werden können, wobei ein schmaler Bereich verminderter Wirkung vermieden werden sollte.

Beim Einschalten des das SBS-Signal bereitstellenden Lasers muss sich die QBER in Richtung der definierten und erwarteten Werte deutlich verändern. Ist das nicht der Fall, dann würde dies bedeuten, dass sich das QKD-System verändert hat und demnach eventuell ein Angriff vorliegt. Die QBER Werte können bei eingeschaltetem Laser für das SBS-Signal die Grenzwerte auch bewusst überschreiten, wobei das System diese Überschreitung selber herbeiführt, dieses aber durch die Korrelation mit dem Herzschlagsystem nicht als Fehler, sondern als erwarteten Wert ansieht. Nach dem Abschalten des Lasers für das SBS-Signal muss allerdings der QBER Wert wieder deutlich unter dem Schwellenwert beim erwarteten QBER Wert liegen.

Somit werden durch das SBS-Herzschlagsystem ständig die QBER Werte proaktiv mit erwarteten Werten verglichen. Wenn hier Abweichungen vorliegen könnte ein Angriff vorliegen und es würden entsprechende Gegenmaßnahmen eingeleitet werden.

Anhand von Zeichnungen sollen nachfolgend Ausführungsbeispiele für einen erfindungsgemäß ausgebildeten QKD-Knoten gegeben und nochmals Einzelheiten des Verfahrens erläutert werden. Die Zeichnungen zeigen im Einzelnen:
- Fig. 1:: ein QKD-System mit einem erfindungsgemäßen QKD-Knoten (QKD-fähiger Netzwerkknoten) entsprechend einer ersten Ausbildungsform,
- Fig. 2:: ein QKD-System mit einer anderen Ausbildungsform des erfindungsgemäßen QKD-Knotens,
- Fig. 3:: einen möglichen zeitlichen Verlauf der QBER bei entsprechender Ausbildung des Quantensignals,
- Fig. 4:: einen möglichen zeitlichen Verlauf der QBER im Falle einer anderen möglichen Ausbildung des Herzschlagsignals,
- Fig. 5:: ein QKD-System nach dem Stand der Technik,
- Fig. 6:: einen möglichen zeitlichen Verlauf der QBER bei einem Angriff auf das QKD-System gemäß Fig. 5.

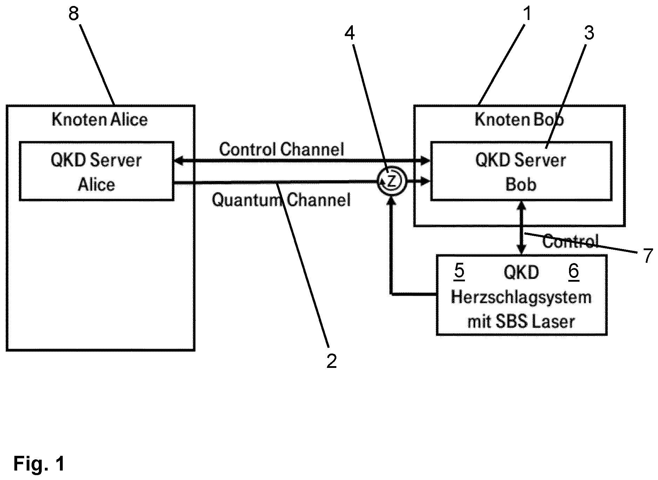

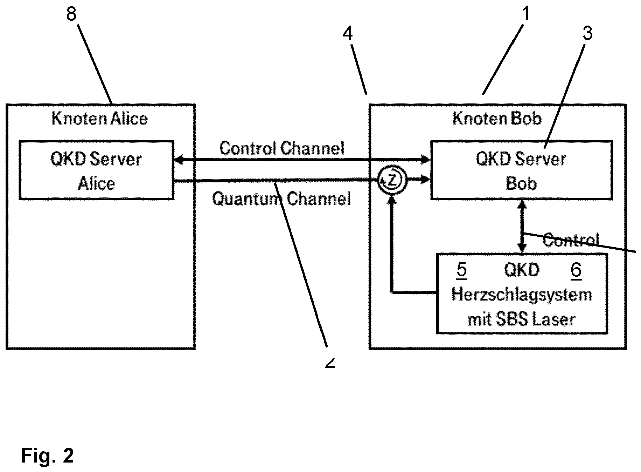

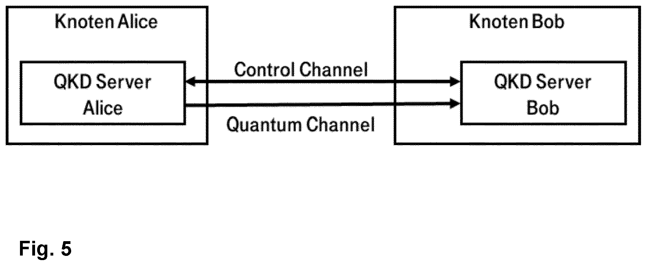

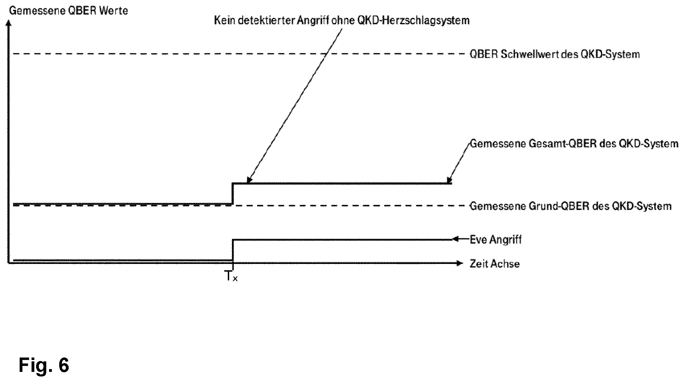

Zunächst soll unter Bezugnahme auf die Figuren 5 und 6 die Situation nach dem Stand der Technik erläutert werden. Da in diesen Figuren - wie gesagt - der Stand der Technik dargestellt ist, wurde auf das Antragen von Bezugszeichen verzichtet, wobei aber die jeweilige Art der einzelnen Komponenten und dargestellten Details aufgrund der enthaltenen Stichworte und im Zusammenhang mit den Erläuterungen zu den Figuren 1 bis 4 unmittelbar klar ist. Die Fig. 5 zeigt eine schematische Darstellung eines QKD-Systems nach dem Stand der Technik und die Fig. 6 einen möglichen, sich im Falle eines Angriffs bei dem mit "Knoten Bob" bezeichneten QKD-Knoten (Netzwerkknoten) des QKD-Systems nach Fig. 5 einstellenden Verlauf der QBER. Ferner sei an dieser Stelle darauf hingewiesen, dass es sich bei dem QKD-System gemäß Fig. 5, ebenso wie bei den Systemen der Ausführungsbeispiele gemäß den Fig. 1 und 2, um ein optisches QKD-System handelt.

Das in der Fig. 5 schematisch und stark vereinfacht dargestellte QKD-System nach dem Stand der Technik besteht aus zwei Netzwerkknoten, die als QKD-Knoten zur Erzeugung identischer, gleichzeitig bei beiden Netzwerkknoten vorliegenden quantensicheren Schlüssel mittels eines QKD-Verfahrens ausgebildet sind. Beide Netzwerkknoten weisen demnach je einen QKD-Server auf. Diese QKD-Server beider Netzwerkknoten sind durch einen Quantenkanal (Quantum Channel) und durch einen speziell gesicherten, nicht zur Übertragung quantenmechanischer Zustände geeigneten klassischen Kontrollkanal (Control Channel) miteinander verbunden.

Bei dem gezeigten Beispiel ist der Quantenkanal unidirektional ausgebildet. Das heißt, es wird von einem System ausgegangen, bei dem der links dargestellte Netzwerkknoten "Knoten Alice" zur Erzeugung und zum Austausch quantensicherer Schlüssel Signale in Form quantenmechanischer Zustände an den rechts dargestellten Netzwerkknoten "Knoten Bob" über den Quantenkanal aussendet. Im Hinblick auf die Übertragung der Quantenzustände sind demnach der "Knoten Alice" als sendender QKD-Knoten und der "Knoten Bob" als empfangender QKD-Knoten anzusehen.

Wie bereits früher ausgeführt, sind abweichend hiervon aber auch Systeme denkbar, bei denen eine Photonenquelle zwischen den beiden QKD-Knoten angeordnet ist, wobei beide QKD-Knoten über den in diesem Falle bidirektional ausgebildeten Quantenkanal von dieser Photonenquelle quantenmechanische Zustände vermittelnde Photonen empfangen. An dieser Stelle und nachfolgend im Hinblick auf die Ausführungsbeispiele der Erfindung sollen jedoch, ohne dass sich hieraus eine Beschränkung der Erfindung ergibt, nur Systeme mit einem unidirektionalen Kanal betrachtet werden.

Bei dem in der Fig. 5 gezeigten QKD-System mit unidirektionalem Quantenkanal kann sich im Falle eines Angriffs auf das QKD-System bei dem empfangenden QKD-Knoten ("Knoten Bob") beispielsweise der in der Fig. 6 gezeigte Verlauf für die QBER einstellen. Wie aus der Fig. 6 erkennbar ist, weist das QKD-System nach der Fig. 5 eine so mittels einer Monitoring-Einrichtung des empfangenden QKD-Knotens messbare und folglich für das QKD-System bekannte mittlere QBER auf. Diese ist in der Zeichnung (Fig. 6) durch die untere gestrichelte Linie dargestellt. Erfolgt nun beginnend zu dem Zeitpunkt Tₓ (durch Eve) ein Angriff auf das QKD-System, so ergibt sich aufgrund der Überlagerung der mittleren systemtypischen QBER mit der durch den Angriff verursachten QBER der durch die obere durchgezogene Linie dargestellte Verlauf der QBER, sofern der Angriff so geschickt ausgeführt wird, dass die Gesamt-QBER stets unterhalb der für das System festgelegten Schwelle bleit - symbolisiert durch die obere gestrichelte Linie.

Ein entsprechender Angriff kann folglich durch das QKD-System, das heißt durch die Kontroll- und Monitoreinrichtung des empfangenden QKD-Knotens (Knoten Bob) nicht als solcher erkannt werden und bleibt damit unentdeckt. Andererseits kann der Schwellwert für die QBER für das System bei seiner Einrichtung auch nicht zu niedrig angesetzt werden, beispielsweise um eventuell Angriffe der dargestellten Art zu entdecken, da das System dann eventuell auch auf langzeitliche, zum Beispiel durch sich verändernde Temperaturen einstellende Schwankungen der QBER ansprechen und diese fälschlicherweise als Angriff werten würde.

Die Figuren 1 und 2 zeigen demgegenüber QKD-Systeme, welche mit möglichen Ausbildungsformen eines erfindungsgemäßen Netzwerkknotens (QKD-Knoten 1) ausgestattet sind. Die beiden Netzwerkknoten des Systems sind QKD-fähig und sollen daher nachfolgend, ebenso wie in den Patentansprüchen als QKD-Knoten 1, 8 bezeichnet werden. Hierbei weist der erfindungsgemäße, das heißt der Quantenzustände über den Quantenkanal 2 empfangende QKD-Knoten 1 (Knoten Bob) erfindungsgemäß ein Herzschlagsystem auf. Dieses Herzschlagsystem umfasst eine (nicht im Detail dargestellte) optische Signalquelle 5, eine über einen Kontrollkanal 7 mit dem im QKD-Knoten 1 angeordneten Teil des QKD-Systems verbundene Kontroll- und Monitoreinrichtung 6 und - als wesentliches Element - einen eingangsseitig des QKD-Knotens 1 (des empfangenden Netzwerkknotens) in den Quantenkanal 2 eingefügten optischen Dreiport-Zirkulator 4.

Das Herzschlagsystem, das heißt insbesondere dessen optische Signalquelle 5 und die Kontroll- und Monitoreinrichtung 6, kann, wie in der Fig. 1 gezeigt (zum Beispiel im Falle einer Nachrüstung), als separates System ausgebildet oder vorteilhafterweise, wie in der Fig. 2 gezeigt, in den empfangenden QKD-Knoten 1 integriert sein. Im letztgenannten Falle ist, wie in der Fig. 2 ersichtlich, auch der optische Dreiport-Zirkulator 4 innerhalb der speziell gesicherten Umgebung (Trusted Zone) des empfangenden QKD-Knotens 1 (Knoten Bob) angeordnet. In jedem Falle besteht bei beiden der in den Figuren 1 und 2 gezeigten Ausbildungsformen zwischen der (wie gesagt, nicht im Detail gezeigten) Kontroll- und Monitoreinrichtung 6 des Herzschlagsystems und einer (ebenfalls nicht im Detail gezeigten) dazu ausgebildeten Schnittstelle des im QKD-Knoten 1 angeordneten Teils des QKD-Systems eine Wirkverbindung (Kontrollkanal 7, respektive "Control").

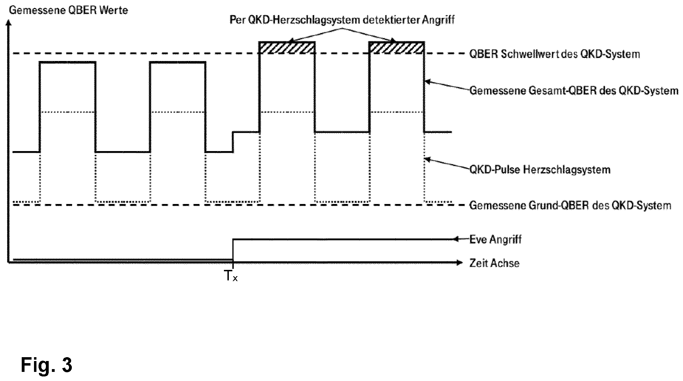

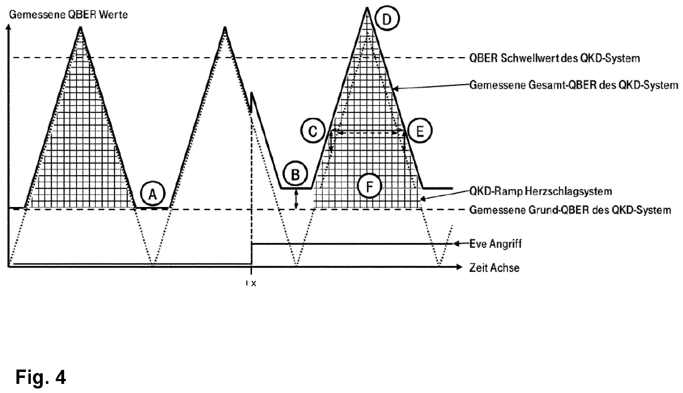

Mittels der nicht gezeigten optischen Signalquelle 5 des Herzschlagsystems, bei welcher es sich vorzugsweise um einen den Effekt der SBS im Quantenkanal hervorrufenden Laser handelt, wird ein deterministisches, periodisches Signal sehr niedriger Leistung in den Quantenkanal 2 eingekoppelt. Dieses zusätzliche Signal SBS-Signal wird über den Dreiport-Zirkulator in den Quantenkanal eingekoppelt und verursacht einen, bei dem empfangenden QKD-fähigen Netzwerkkoten (QKD-Knoten, respektive Knoten Bob) mittels der über den Kontrollkanal 7 mit ihm verbundenen Kontroll- und Monitoreinrichtung 6 erfassbaren deterministischen zeitlichen Verlauf der QBER. Beispiele für einen solchen deterministischen zeitlichen Verlauf der QBER und sich im Falle eines Angriffs ergebender Abweichungen hiervon sind in den Figuren 3 und 4 dargestellt.

Die Fig. 3 zeigt einen zeitlichen Verlauf der QBER für eine mögliche Gestaltung der Erfindung, bei welcher über den Dreiport-Zirkulator ein Herzschlagsignal in den Quantenkanal 2 eingekoppelt wird, welches, bei Abwesenheit von Angriffen auf das QKD-System, einen deterministischen zeitlichen Verlauf der QBER verursacht, der die Form eines Rechtecksignals aufweist. Erfolgt nun beginnend mit dem Zeitpunkt Tₓ ein Angriff auf das QKD-System, so kann sich der ebenfalls aus der Fig. 3 erkennbare Verlauf der QBER an dem empfangenden QKD-Knoten 1 einstellen, wobei das über den Dreiport-Zirkulator 4 eingebrachte Herzschlagsignal so ausgebildet ist, dass die QBER infolge des Angriffs deterministisch und zeitperiodisch den QBER-Schwellwert überschreitet. Dies wird einerseits zu einer Reaktion von entsprechenden Einheiten des QKD-Systems führen und ist andererseits unabhängig von einem Überschreiten des QBER-Schwellwerts in Form einer Abweichung von dem deterministischen zeitlichen Verlauf der QBER durch die Kontroll- und Monitoreinrichtung 6 detektierbar und auswertbar.

Im Ergebnis der Detektion eines Angriffs werden einerseits durch entsprechende Einheiten des QKD-Systems selbst, aber insbesondere durch die Kontroll- und Monitoreinrichtung 6 des Herzschlagsystems, entsprechende (geeignete) Maßnahmen ausgelöst. Beispielsweise werden durch die Kontroll- und Monitoreinrichtung 6 des Herzschlagsystems an das Schlüsselmanagement des QKD-Systems und/oder an ein übergeordnetes Netzwerkmanagement entsprechende Notifikationen (Notifications) ausgesendet. Unter anderem kann infolgedessen die Schlüsselgenerierung vorübergehend ausgesetzt werden.

Die Fig. 4 zeigt den möglichen zeitlichen Verlauf der QBER für eine Ausbildungsform der Erfindung, bei welcher das durch die optische Signalquelle des Herzschlagsystems ausgesendete und über den optischen Dreiport-Zirkulator 4 in den Quantenkanal 2 eingekoppelte Signal in Überlagerung mit der mittleren systemtypischen QBER des QKD-Systems (bei Abwesenheit von Angriffen) zu einem Dreiecksignal mit einem rampenförmigen Verlauf führt. Erfolgt nun wiederrum zum Zeitpunkt Tₓ ein Angriff auf das System, so stellt sich der ebenfalls aus der Fig. 4 ersichtliche, von dem (vorgesehenen) deterministischen zeitlichen Verlauf für die QBER abweichende Verlauf ein.

Durch Auswertung einzelner Bereiche des resultierenden deterministischen zeitlichen Verlaufs der QBER, so beispielsweise der steigenden und fallenden Flanken, können bei dieser Gestaltung der Erfindung komplexere Auswertungen über Art und Qualität des Angriffs vorgenommen werden. Bei dem gezeigten Beispiel ist zudem das über den Dreiport-Zirkulator 4 in den Quantenkanal 2 eingekoppelte Signal so gestaltet, dass die QBER in ihrem zeitlichen Verlauf auch ohne das Vorliegen eines Angriffs den QBER-Schwellwert zeitperiodisch überschreitet. Dies ermöglicht es unter anderem auch Angriffe zu detektieren, die gegebenenfalls gegen das Herzschlagsystem selbst ausgeführt werden und dazu führen, dass die QBER, abweichend von ihrem vorgesehenen zeitlichen Verlauf, die QBER-Schwelle nicht periodisch überschreitet.

Folgende komplexe Auswertungen können mithilfe eines zu einem rampenförmigen QBER-Verlauf gemäß Fig. 4 führenden Herzschlagsignals beispielsweise zusätzlich durchgeführt werden:
- Monitoring der gemessenen Grund-QBER (Fig. 4, Bereiche A und B), Vergleich mit der Historie, Mittelwertbildung zum Ausgleich kleinerer Systemschwankungen,
   - Detektion von Eve Angriffen aufgrund sprunghafter Änderungen der Grund-QBER Werte des QKD-Systems.
   - Detektion von Eve-Angriffen aufgrund unterschiedlicher Grund-QBER Werte in den Bereichen A und E innerhalb eines Rampenabschnitts.
- Monitoring des zeitlichen Verlaufs der deterministisch vorgegebenen QBER-Werte (Fig. 4, Bereiche C und E), Vergleich mit der Historie, Mittelwertbildung zum Ausgleich kleinerer Systemschwankungen,
   - Detektion von Eve-Angriffen aufgrund einer sprunghaften vertikalen Verschiebung der Rampen C und E im Vergleich zur Historie.
   - Detektion von Eve-Angriffen aufgrund einer zeitlichen Verbreiterung bei gleichem QBER-Level zwischen den Punkten C und E innerhalb eines Rampenabschnitts im Vergleich zur Historie.
- Monitoring der gemessenen maximalen QBER (Fig.4, Bereich D), Vergleich mit der Historie, Mittelwertbildung zum Ausgleich kleinerer Systemschwankungen,
   - Detektion von Eve-Angriffen aufgrund sprunghafter Änderungen der maximalen QBER-Werte des QKD-Systems
   - Detektion von Eve-Angriffen aufgrund eines längeren zeitlichen Verbleibs des gemessenen QBER-Verlaufs oberhalb der QBER-Schwelle des QKD-Systems
- Monitoring des zeitlichen Verlaufs der deterministisch vorgegebenen QBER-Werte (Bereich F der Fig. 4), Vergleich mit der Historie, Mittelwertbildung zum Ausgleich kleinerer Systemschwankungen,
   - Detektion von Eve-Angriffen durch Bildung des Integrals unter der Rampenfunktion, welches im Falle eines Angriffs seinen Wert sprunghaft ändert.
- Monitoring des zeitlichen Verlaufs der deterministisch vorgegebenen QBER-Werte (im Bereich D der Fig. 4), Vergleich mit der Historie, Mittelwertbildung zum Ausgleich kleinerer Systemschwankungen,
   - Detektion von Eve-Angriffen durch das Monitoring des deterministischen, induzierten Überschreitens des QBER-Schwellwertes des QKD-Systems. Bleibt die deterministisch induzierte Überschreitung des QBER-Schwellwertes des QKD-Systems aus, das heißt das induzierte SBS-Rampen-Herzschlagsignal wirkt nicht mehr, dann kann ein möglicher Eve-Angriff vorliegen.

Am Beispiel des für das zusätzliche Signal verwendeten Rampensignals gemäß Fig. 4 sollen nachfolgend mittels der Erfindung detektierbare Angriffsszenarien und solche die demgegenüber auch mittels des Herzschlagsystems nicht detektierbar sind diskutiert werden.

### Detektierbare Angriffsszenarien:

- Optische Abschwächer der Photonenquelle: Sollte der optische Abschwächer der QKD Quelle (Alice) nicht mehr korrekt funktionieren und eine erhöhte Quantum Leistung eingestrahlt werden, so würde das sehr schwache SBSinduzierte Signal einen geringeren Einfluss auf die QBER-Werte ausüben, so dass ein Angriff nach Fig. 4, Bereich D vorliegen könnte.
- Optische Leitung: Die Funktionsweise der Erfindung macht einen direkten Angriff auf den optischen Quantenkanal sichtbar. Die aufgrund des Wirkens der SBS-induzierten Signale von der Kontroll- und Monitoreinrichtung 6 des Quantenzustände über den Quantenkanal 2 empfangenden QKD-Knotens 1 (Knoten Bob) gemessenen QBER-Signale müssen eigentlich den durch die punktierte Linie in der Fig. 4 veranschaulichten zeitlichen Verlauf zeigen. Ist dies nicht der Fall (zum Beispiel folgt der zeitliche Verlauf nicht der aufgrund der Einkopplung des deterministischen Laser-Signals erwarteten deterministischen Kurve), könnte ein Angriff auf die optische Leitung vorliegen.
- Optische Filter: Die Funktion der optischen Filter auf der Empfängerseite (beim Knoten Bob) können durch die QBER-Messung in der Amplitude und bei der Quanten Arbeitsfrequenz überprüft werden. Die aufgrund des Wirkens der SBS-induzierten Signale von der Kontroll- und Monitoreinrichtung 6 des Quantenzustände über den Quantenkanal 2 empfangenden QKD-Knotens 1 (Knoten Bob) gemessenen QBER-Signale müssen eigentlich den durch die punktierte Linie in der Fig. 4 veranschaulichten zeitlichen Verlauf zeigen. Ist dies nicht der Fall, könnte auch ein Angriff auf die optischen Filter vorliegen.
- Optisches Interferometer: Die Funktion des optischen Interferometers zur Messung der Phasenkohärenz können durch das QKD-Herzschlagsystem auf der Empfängerseite (Knoten Bob) überprüft werden. Hierbei müssen die aufgrund des Wirkens der SBS-induzierten Signale von der Kontroll- und Monitoreinrichtung 6 des Quantenzustände über den Quantenkanal 2 empfangenden QKD-Knotens 1 gemessenen QBER-Signale eigentlich den durch die punktierte Linie in der Fig. 4 veranschaulichten zeitlichen Verlauf zeigen. Ist dies nicht der Fall, könnte auch ein Angriff auf das optisches Interferometer vorliegen.
- Detektoren: Die Funktion der optischen Detektoren lässt sich durch das QKD-Herzschlagsystem auf der Empfängerseite (Knoten Bob) überprüfen. Die aufgrund des Wirkens der SBS-induzierten Signale von der Kontroll- und Monitoreinrichtung 6 des Quantenzustände über den Quantenkanal 2 empfangenden QKD-Knotens 1 (Knoten Bob) gemessenen QBER-Signale müssen eigentlich den durch die punktierte Linie in der Fig. 4 veranschaulichten zeitlichen Verlauf zeigen. Ist dies nicht der Fall, könnte auch ein Angriff auf die Detektoren vorliegen.
- Denial of Service: Eine Veränderung des optischen Quantenkanals des QKD-Systems (Strecke und Komponenten in Alice und Bob), ein Blenden der Detektoren durch einen zusätzlichen Laserstrahl oder ähnliches kann durch eine Korrelation detektiert werden. Hierbei müssen die aufgrund des Wirkens der SBS-induzierten Signale von der Kontroll- und Monitoreinrichtung 6 des Quantenzustände über den Quantenkanal 2 empfangenden QKD-Knotens 1 gemessenen QBER-Signale eigentlich den durch die punktierte Linie in der Fig. 4 veranschaulichten zeitlichen Verlauf zeigen. Ist dies nicht der Fall, könnte eine Denial of Service Attacke vorliegen.

### Nichtdetektierbare Angriffsszenarien:

- Trojanisches Pferd Angriff: Eine Kompromittierung der inneren Bauteile der QKD-Server, zum Beispiel der Zufallszahlen-Generatoren, die in den Endpunkten (QKD-Knoten 1, 8, respektive Netzwerkknoten Alice und Bob) verbaut sind, lässt sich nicht mittels der Erfindung nicht feststellen.

## Patentansprüche

1. Verfahren zur Detektion und Behandlung von Angriffen auf ein QKD-System mit zwei QKD-Knoten (1, 8), nämlich mit einem ersten Netzwerkknoten und mit einem zweiten Netzwerkknoten, die für eine nach einem Verfahren der Quantum Key Distribution erfolgende Erzeugung identischer, gleichzeitig bei beiden QKD-Knoten (1, 8) vorliegender quantensicherer Schlüssel über einen Quantenkanal (2) miteinander verbunden sind, über welchen Quantensignale, das heißt quantenmechanische Zustände zwischen den QKD-Knoten (1, 8) übertragen werden, wobei ein möglicher Angriff auf das QKD-System anhand einer Änderung der Bitfehlerrate, das heißt der Quantum Bit Error Rate QBER, bei der Schlüsselerzeugung detektiert wird, **dadurch gekennzeichnet, dass** am Eingang des Quantensignale über den Quantenkanal empfangenden QKD-Knotens (1) ein als Herzschlagsignal wirkendes zusätzliches deterministisches, zeitperiodisches Signal in den Quantenkanal (2) eingekoppelt wird, welches, in Überlagerung mit einer messbaren, systemtypischen mittleren QBER, eine in ihrem zeitlichen Verlauf deterministische und von einer, mit einer dazu ausgebildeten Schnittstelle des QKD-Systems über einen Kontrollkanal (7) verbundenen Kontroll- und Monitoreinrichtung (6) des die Quantensignale empfangenden QKD-Knotens auswertbare QBER verursacht und dass eine mittels der Kontroll- und Monitoreinrichtung (6) registrierte Abweichung von diesem deterministischen zeitlichen Verlauf der QBER als Angriff detektiert und signalisiert wird.

2. Verfahren nach Anspruch 1, **dadurch gekennzeichnet, dass** ein detektierter Angriff auf das QKD-System durch die Kontroll- und Monitoreinrichtung (6) an das Schlüsselmanagement des QKD-Systems oder/und an ein übergeordnetes Netzwerkmanagement notifiziert wird.

3. Verfahren nach Anspruch 1 oder 2, wobei die über den Quantenkanal (2) übertragenen quantenmechanischen Zustände optisch vermittelt werden, **dadurch gekennzeichnet, dass** eingangs des Quantensignale über den Quantenkanal (2) empfangenden QKD-Knotens (1) als Herzschlagsignal ein deterministisches, zeitperiodisches optisches Signal über einen optischen Dreiport-Zirkulator in den Quantenkanal eingekoppelt wird.

4. Verfahren nach Anspruch 3, **dadurch gekennzeichnet, dass** eingangs des Quantensignale empfangenden QKD-Knotens (1) als Herzschlagsignal leistungsarme Impulse eines Lasers in den Quantenkanal (2) eingekoppelt werden, wobei der Laser hinsichtlich der Leistung und der optischen Frequenz der in den Quantenkanal eingekoppelten Laserstrahlung so betrieben wird, dass zwischen den über den Quantenkanal (2) übertragenen, optisch vermittelten quantenmechanischen Zuständen und dem zusätzlich eingekoppelten Signal des Lasers Wechselwirkungen aufgrund des Prinzips der SBS, das heißt der Stimulierten Brillouin Streuung, stattfinden, welche zu einer deterministischen Beeinflussung der messbaren QBER führen.

5. Verfahren nach Anspruch 4, **dadurch gekennzeichnet, dass** als Herzschlagsignal ein optisches Signal mit einer Leistung von ≤ -90 dBm, bei einem Frequenzversatz des Herzschlagsignals gegenüber dem über den Quantenkanal (2) übertragenen optischen Signal von +10 GHz bis +30 GHz, in den Quantenkanal (2) eingekoppelt wird.

6. Verfahren nach einem der Ansprüche 1 bis 5, **dadurch gekennzeichnet, dass** bei der Korrelation der am empfangenden QKD-Knoten (1) gemonitorten QBER gegen den deterministischen, aus der Überlagerung der systemtypischen mittleren QBER mit der durch das Herzschlagsignal verursachten QBER resultierenden zeitlichen Verlauf der gemessenen QBER, Schwankungen der QBER, welche durch langsam wirkende Einflüsse, wie Temperatur und Druck, verursacht werden, durch die Kontroll- und Monitoreinrichtung (6) herausgerechnet werden.

7. Verfahren nach einem der Ansprüche 1 bis 6, **dadurch gekennzeichnet, dass** das eingangs des empfangenden QKD-Knotens (1) als Herzschlagsignal eingekoppelte optische Signal so eingestellt wird, dass zumindest infolge eines tatsächlichen Angriffs auf das QKD-System oder eines als ein möglicher Angriff zu wertenden technischen Defekts des QKD-Systems zeitweise der für die QBER des QKD-Systems festgelegte Schwellwert überschritten wird.

8. Verfahren nach einem der Ansprüche 1 bis 7, **dadurch gekennzeichnet, dass** das eingangs des empfangenden QKD-Knotens (1) als Herzschlagsignal eingekoppelte optische Signal so eingestellt wird, dass der für die QBER des QKD-Systems festgelegte Schwellwert auch ohne das Vorliegen eines Angriffs auf das QKD-System oder eines als Angriff zu wertenden technischen Defekts des QKD-Systems periodisch überschritten wird, wobei ein ausschließlich durch das Herzschlagsignal bewirktes periodisches Überschreiten des Schwellwertes ohne Abweichung von dem durch dieses zusätzliche optische Signal bewirkten deterministischen zeitlichen Verlauf der QBER durch die Kontroll- und Monitoreinrichtung (6) nicht als Angriff auf das QKD-System detektiert und signalisiert wird.

9. Verfahren nach einem der Ansprüche 1 bis 8, **dadurch gekennzeichnet, dass** das der durch das Herzschlagsignal erzeugte deterministische zeitliche Verlauf der QBER durch die Kontroll- und Monitoreinrichtung (6) als Rechtecksignal erfassbar ist.

10. Verfahren nach einem der Ansprüche 1 bis 8, **dadurch gekennzeichnet, dass** das der durch das Herzschlagsignal erzeugte deterministische zeitliche Verlauf der QBER durch die Kontroll- und Monitoreinrichtung (6) als Dreiecksignal mit einem rampenförmigen Verlauf erfassbar ist.

11. Verfahren nach Anspruch 10, **dadurch gekennzeichnet, dass** im Zuge der Korrelation der am empfangenden QKD-Knoten (1) gemonitorten QBER gegen den deterministischen, aus der Überlagerung der systemtypischen mittleren QBER mit der durch das Herzschlagsignal verursachten QBER resultierenden zeitlichen Verlauf der QBER auch Integrale über Flächenabschnitte innerhalb des Dreiecksignals gebildet werden, welche im Falle des Abweichens der gemonitorten QBER vom deterministischen zeitlichen Verlauf qualitative Aussagen über den möglicherweise erfolgten Angriff auf das QKD-System ermöglichen.

12. QKD-Knoten, nämlich Netzwerkknoten (1), der mit einem anderen Netzwerkknoten (8) unter Ausbildung eines optischen QKD-Systems für eine nach einem Verfahren der Quantum Key Distribution erfolgende Erzeugung identischer, gleichzeitig bei beiden Netzwerkknoten (1, 8), vorliegender quantensicherer Schlüssel über einen Quantenkanal (2) zumindest zum Empfang optisch vermittelter quantenmechanischer Zustände verbunden ist, **dadurch gekennzeichnet, dass** der als QKD-Knoten ausgebildete Netzwerkknoten (1) ein aus einer optischen Strahlungsquelle(5), aus einem eingangs des Netzwerkknotens (1) in den Quantenkanal (2) eingefügten optischen Dreiport-Zirkulator (4) und aus einer, mit einer dazu ausgebildeten Schnittstelle eines im Netzwerkknoten (1) angeordneten Teils (3) QKD-Systems über einen Kontrollkanal (7) verbundenen, die QBER monitorenden Kontroll- und Monitoreinrichtung (6) bestehendes Herzschlagsystem aufweist, wobei
- die optische Strahlungsquelle (5) zur Erzeugung eines als Herzschlagsignal wirkenden, deterministischen periodischen optischen Signals ausgebildet ist, welches, über den Dreiport-Zirkulator (4) in den Quantenkanal (2) eingekoppelt, in Überlagerung mit einer messbaren, systemtypischen mittleren QBER des QKD-Systems, eine in ihrem zeitlichen Verlauf deterministische und von der Kontroll- und Monitoreinrichtung (6) bei dem Netzwerkknoten (1) auswertbare QBER verursacht,
- die Kontroll- und Monitoreinrichtung (6) dazu ausgebildet ist, die Strahlungsquelle (5) zur Erzeugung des Herzschlagsignals zu steuern und eine durch sie registrierte Abweichung von dem deterministischen zeitlichen Verlauf der QBER als Angriff zu detektieren und einem Schlüsselmanagement des QKD-Systems und/oder einem übergeordneten Netzwerkmanagement zu signalisieren.

13. QKD-Knoten (1) nach Anspruch 12, **dadurch gekennzeichnet, dass** die Strahlungsquelle (5) des Herzschlagsystems des QKD-Knotens (1) ein Laser ist, der hinsichtlich der Leistung und der optischen Frequenz der in den Quantenkanal (2) eingekoppelten Laserstrahlung so betrieben wird, dass zwischen den über den Quantenkanal (2) übertragenen, optisch vermittelten quantenmechanischen Zuständen und dem zusätzlich eingekoppelten Signal des Lasers Wechselwirkungen aufgrund des Prinzips der SBS, das heißt der Stimulierten Brillouin Streuung, stattfinden, welche zu einer deterministischen Beeinflussung der messbaren QBER führen.

14. QKD-Knoten (1) nach Anspruch 12 oder 13, **dadurch gekennzeichnet, dass** das Herzschlagsystem in den QKD-Knoten (1) integriert ist, wobei auch der optische Dreiport-Zirkulator (4) innerhalb des als Trusted Node ausgebildeten QKD-Knotens (1) angeordnet ist.

## Claims

1. Method for detecting and handling attacks on a QKD system having two QKD nodes (1, 8), namely having a first network node and having a second network node which are connected to each other via a quantum channel (2) for generating, according to a method of Quantum Key Distribution, identical quantum-secure keys present simultaneously at both QKD nodes (1, 8), which quantum channel is used to transmit quantum signals, that is to say quantum mechanical states, between the QKD nodes (1, 8), wherein a possible attack on the QKD system is detected during the key generation on the basis of a change in the bit error rate, that is to say the Quantum Bit Error Rate QBER, **characterized in that**, at the input of the QKD node (1) receiving quantum signals via the quantum channel, an additional, deterministic, time periodic signal acting as heartbeat signal is coupled into the quantum channel (2) and, when overlaid with a measurable, system-typical average QBER, produces a QBER which is deterministic in its time characteristic and is able to be evaluated by a control and monitoring device (6) of the QKD node receiving the quantum signals, which control and monitoring device is connected via a control channel (7) to an interface of the QKD system designed for this purpose, and **in that** a deviation from this deterministic time characteristic of the QBER, registered by means of the control and monitoring device (6), is detected and signalled as an attack.

2. Method according to Claim 1, **characterized in that** the control and monitoring device (6) notifies the key management system of the QKD system or/and a superordinate network management system about a detected attack on the QKD system.

3. Method according to Claim 1 or 2, wherein the quantum mechanical states transmitted via the quantum channel (2) are optically conveyed, **characterized in that**, at the input of the QKD node (1) receiving quantum signals via the quantum channel (2), a deterministic, time periodic, optical signal is coupled into the quantum channel as heartbeat signal via a three-port optical circulator.

4. Method according to Claim 3, **characterized in that**, at the input of the QKD node (1) receiving quantum signals, low-power pulses of a laser are coupled into the quantum channel (2) as heartbeat signal, wherein the laser, in terms of the power and the optical frequency of the laser radiation coupled into the quantum channel, is operated such that, due to the principle of SBS, that is to say Stimulated Brillouin Scattering, interactions take place between the optically conveyed quantum mechanical states that are transmitted via the quantum channel (2) and the signal of the laser that is additionally coupled in, which interactions lead to a deterministic influencing of the measurable QBER.

5. Method according to Claim 4, **characterized in that** the heartbeat signal coupled into the quantum channel (2) is an optical signal having a power of ≤ -90 dBm, at a frequency offset of the heartbeat signal with respect to the optical signal transmitted via the quantum channel (2) of +10 GHz to +30 GHz.

6. Method according to one of Claims 1 to 5, **characterized in that**, during the correlation of the QBER monitored at the receiving QKD node (1) against the deterministic time characteristic of the measured QBER resulting from the overlaying of the system-typical average QBER with the QBER produced by the heartbeat signal, variations in the QBER caused by slow-acting influences, such as temperature and pressure, are deducted by the control and monitoring device (6).

7. Method according to one of Claims 1 to 6, **characterized in that** the optical signal coupled in at the input of the receiving QKD node (1) as heartbeat signal is adjusted such that the threshold value defined for the QBER of the QKD system is temporarily exceeded at least as a result of an actual attack on the QKD system or of a technical defect of the QKD system that is to be regarded as a possible attack.

8. Method according to one of Claims 1 to 7, **characterized in that** the optical signal coupled in at the input of the receiving QKD node (1) as heartbeat signal is adjusted such that the threshold value defined for the QBER of the QKD system is periodically exceeded even without the existence of an attack on the QKD system or of a technical defect of the QKD system that is to be regarded as an attack, wherein periodic exceeding of the threshold value caused exclusively by the heartbeat signal without deviation from the deterministic time characteristic of the QBER caused by this additional optical signal is not detected and signalled by the control and monitoring device (6) as an attack on the QKD system.

9. Method according to one of Claims 1 to 8, **characterized in that** the deterministic time characteristic of the QBER generated by the heartbeat signal is able to be detected by the control and monitoring device (6) as a square-wave signal.

10. Method according to one of Claims 1 to 8, **characterized in that** the deterministic time characteristic of the QBER generated by the heartbeat signal is able to be detected by the control and monitoring device (6) as a triangular signal with a ramped profile.

11. Method according to Claim 10, **characterized in that**, in the course of the correlation of the QBER monitored at the receiving QKD node (1) against the deterministic time characteristic of the QBER resulting from the overlaying of the system-typical average QBER with the QBER produced by the heartbeat signal, integrals are also formed over area sections within the triangular signal which, in the case of the monitored QBER deviating from the deterministic time characteristic, allow qualitative statements about the attack that has possibly occurred on the QKD system.

12. QKD node, namely network node (1), which is connected to another network node (8) via a quantum channel (2) at least for receiving optically conveyed quantum mechanical states, resulting in the formation of an optical QKD system for generating, according to a method of Quantum Key Distribution, identical quantum-secure keys present simultaneously at both network nodes (1, 8), **characterized in that** the network node (1) designed as a QKD node has a heartbeat system consisting of an optical radiation source (5), of a three-port optical circulator (4) inserted into the quantum channel (2) at the input of the network node (1), and of a control and monitoring device (6) which is connected via a control channel (7) to an interface designed for this purpose of part (3) of the QKD system arranged in the network node (1) and which monitors the QBER, wherein
- the optical radiation source (5) is designed to generate a deterministic, periodic, optical signal acting as heartbeat signal which, when coupled into the quantum channel (2) via the three-port circulator (4) and overlaid with a measurable, system-typical average QBER of the QKD system, produces a QBER which is deterministic in its time characteristic and is able to be evaluated by the control and monitoring device (6) at the network node (1),
- the control and monitoring device (6) is designed to control the radiation source (5) for generating the heartbeat signal and to detect a deviation from the deterministic time characteristic of the QBER, registered by the control and monitoring device, as an attack and to signal this to a key management system of the QKD system and/or to a superordinate network management system.

13. QKD node (1) according to Claim 12, **characterized in that** the radiation source (5) of the heartbeat system of the QKD node (1) is a laser which, in terms of the power and the optical frequency of the laser radiation coupled into the quantum channel (2), is operated such that, due to the principle of SBS, that is to say Stimulated Brillouin Scattering, interactions take place between the optically conveyed quantum mechanical states that are transmitted via the quantum channel (2) and the signal of the laser that is additionally coupled in, which interactions lead to a deterministic influencing of the measurable QBER.

14. QKD node (1) according to Claim 12 or 13, **characterized in that** the heartbeat system is integrated into the QKD node (1), wherein the three-port optical circulator (4) is also arranged within the QKD node (1) which is designed as a trusted node.

## Revendications

1. Procédé de détection et de traitement d'attaques sur un système QKD comportant deux noeuds QKD (1, 8), à savoir un premier noeud de réseau et un deuxième noeud de réseau, qui sont reliés entre eux par le biais d'un canal quantique (2) qui permet de transmettre des signaux quantiques, c'est-à-dire des états de mécanique quantique, entre les noeuds QKD (1, 8), afin de générer des clés à sécurité quantiques identiques, simultanément présentes aux deux noeuds QKD (1, 8), en mettant en œuvre un procédé de distribution de clés quantiques, une éventuelle attaque du système QKD étant détectée sur la base d'une modification du taux d'erreur binaire, c'est-à-dire du taux d'erreur binaire quantique QBER, lors de la génération de clés, **caractérisé en ce que**, à l'entrée du noeud QKD (1) qui reçoit les signaux quantiques par le biais du canal quantique, un signal supplémentaire déterministe et périodique, qui agit comme un signal de battement cardiaque, est injecté par couplage dans le canal quantique (2), lequel signal supplémentaire provoque, en superposition avec un QBER moyen mesurable typique du système, un QBER déterministe en termes de variation dans le temps qui peut être évalué par un dispositif de commande et de surveillance (6) du noeud QKD qui reçoit les signaux quantiques, lequel dispositif est relié à une interface dédiée du système QKD par le biais d'un canal de commande (7) et **en ce qu'**un écart, enregistré au moyen du dispositif de commande et de surveillance (6), par rapport à cette variation déterministe dans le temps du QBER est détecté et signalé comme une attaque.

2. Procédé selon la revendication 1, **caractérisé en ce qu'**une attaque détectée sur le système QKD est notifiée par le dispositif de commande et de surveillance (6) à la gestion de clés du système QKD et/ou à une gestion de réseau de niveau supérieur.

3. Procédé selon la revendication 1 ou 2, les états de mécanique quantique transmis par le biais du canal quantique (2) étant transmis par des moyens optiques, **caractérisé en ce que**, à l'entrée du noeud QKD (1) qui reçoit les signaux quantiques par le biais du canal quantique (2), un signal optique déterministe périodique est injecté par couplage, sous la forme d'un signal de battement cardiaque, dans le canal quantique par le biais d'un circulateur optique à trois ports.

4. Procédé selon la revendication 3, **caractérisé en ce que**, à l'entrée du noeud QKD (1) qui reçoit les signaux quantiques, des impulsions de faible puissance d'un laser sont injectées par couplage dans le canal quantique (2) sous la forme d'un signal de battement cardiaque, le laser étant utilisé en termes de puissance et de fréquence optique du rayonnement laser injecté par couplage dans le canal quantique de façon à produire des interactions entre les états de mécanique quantique, communiqués par des moyens optiques et transmis par le biais du canal quantique (2), et le signal du laser injecté en plus par couplage sur la base du principe de SBS, c'est-à-dire la diffusion de Brillouin stimulée, lesquelles interactions conduisent à une influence déterministe sur le QBER mesurable.

5. Procédé selon la revendication 4, **caractérisé en ce qu'**un signal optique d'une puissance ≤ -90 dBm est injecté par couplage dans le canal quantique (2) comme signal de battement cardiaque avec un décalage de fréquence du signal de battement cardiaque par rapport au signal optique de +10 GHz à +30 GHz transmis par le biais du canal quantique (2).

6. Procédé selon l'une des revendications 1 à 5, **caractérisé en ce que**, dans la corrélation du QBER surveillé au niveau du noeud QKD (1) par rapport à la variation déterministe dans le temps du QBER mesuré, laquelle résulte de la superposition du QBER moyen typique du système au QBER provoqué par le signal de battement cardiaque, des fluctuations du QBER, qui sont provoquées par des influences à action lente telles que la température et la pression, sont calculées par le dispositif de commande et de surveillance (6).

7. Procédé selon l'une des revendications 1 à 6, **caractérisé en ce que** le signal optique injecté par couplage sous la forme d'un signal de battement cardiaque à l'entrée du noeud QKD récepteur (1) est réglé de telle sorte qu'au moins à la suite d'une attaque réelle sur le système QKD ou comme une attaque possible due au défaut technique à évaluer du système QKD, la valeur seuil spécifiée pour le QBER du système QKD soit temporairement dépassée.

8. Procédé selon l'une des revendications 1 à 7, **caractérisé en ce que** le signal optique injecté par couplage sous la forme d'un signal de battement cardiaque à l'entrée du noeud QKD récepteur (1) est réglé de sorte que la valeur seuil spécifiée pour le QBER du système QKD soit dépassée périodiquement même sans la présence d'une attaque sur le système QKD ou d'un défaut technique, à évaluer comme attaque, du système QKD, un dépassement périodique de la valeur seuil, provoqué exclusivement par le signal de battement cardiaque, sans écart par rapport à la variation déterministe dans le temps du QBER provoqué par ce signal optique supplémentaire n'étant pas détecté et signalé par le dispositif de commande et de surveillance (6) comme une attaque sur le système QKD.

9. Procédé selon l'une des revendications 1 à 8, **caractérisé en ce que** la variation déterministe dans le temps du QBER, générée par le signal de battement cardiaque, peut être détectée par le dispositif de commande et de surveillance (6) comme un signal rectangulaire.

10. Procédé selon l'une des revendications 1 à 8, **caractérisé en ce que** la variation déterministe dans le temps du QBER, générée par le signal de battement cardiaque, peut être détectée par le dispositif de commande et de surveillance (6) comme un signal triangulaire avec une variation en forme de rampe.

11. Procédé selon la revendication 10, **caractérisé en ce que**, au cours de la corrélation du QBER, surveillé au niveau du noeud QKD récepteur (1), par rapport à la variation déterministe dans le temps du QBER, laquelle résulte de la superposition du QBER moyen typique du système au QBER provoqué par le signal de battement cardiaque, des intégrales sont formées sur des portions de surface dans le signal triangulaire, lesquelles permettent de se prononcer en termes de qualité sur l'attaque possible sur le système QKD si le QBER surveillé s'écarte de la variation déterministe dans le temps.

12. Noeud QKD, à savoir noeud de réseau (1), qui est relié à un autre noeud de réseau (8) pour former un système QKD optique destiné à générer des clés à sécurité quantique identiques, présentes simultanément pour les deux noeuds de réseau (1, 8), à l'aide d'un procédé de distribution de clés quantiques, par le biais d'un canal quantique (2) au moins pour recevoir des états de mécanique quantique communiqués par des moyens optiques, **caractérisé en ce que** le noeud de réseau (1) conçu comme noeud QKD comporte un système de battement cardiaque comportant une source de rayonnement optique (5), un circulateur optique à trois ports (4) inséré dans le canal quantique (2) à l'entrée du noeud de réseau (1) et un dispositif de commande et de surveillance (6), surveillant le QBER, qui est relié par le biais d'un canal de commande (7) à une interface dédiée d'une partie du système QKD (3) qui est disposée dans le noeud de réseau (1),
- la source de rayonnement optique (5) étant conçue pour générer un signal optique périodique déterministe qui agit comme un signal de battement cardiaque et qui, en étant injecté par couplage dans le canal quantique (2) par le biais du circulateur à trois ports (4), en étant superposé à un QBER moyen mesurable, typique du système, du système QKD, provoque un QBER qui est déterministe quant à sa variation dans le temps et qui peut être évalué par le dispositif de commande et de surveillance (6) dans le noeud de réseau (1),
- le dispositif de commande et de surveillance (6) étant conçu pour commander la source de rayonnement (5) afin de générer le signal de battement cardiaque et pour détecter un écart, enregistré par ledit dispositif, par rapport à la variation déterministe dans le temps du QBER comme une attaque et pour le signaler à une gestion de clés du système QKD et/ou à une gestion de réseau de niveau supérieur.

13. Noeud QKD (1) selon la revendication 12, **caractérisé en ce que** la source de rayonnement (5) du système de battement cardiaque du noeud QKD (1) est un laser qui est utilisé en termes de puissance et de fréquence optique du rayonnement laser injecté par couplage dans le canal quantique (2) de façon à produire des interactions entre les états de mécanique quantique, communiqués par des moyens optiques et transmis par le biais du canal quantique (2), et le signal du laser injecté en plus par couplage sur la base du principe de SBS, c'est-à-dire la diffusion de Brillouin stimulée, lesquelles interactions conduisent à une influence déterministe sur le QBER mesurable.

14. Noeud QKD (1) selon la revendication 12 ou 13, **caractérisé en ce que** le système de battement cardiaque est intégré dans le noeud QKD (1), le circulateur optique à trois ports (4) étant également disposé dans le noeud QKD (1) conçu comme un noeud de confiance.
